# EUROPÄISCHE PATENTSCHRIFT

(11) **EP 0 812 942 B1**
(45) Veröffentlichungstag und Bekanntmachung des Hinweises auf die Patenterteilung: **02.11.2000**
(21) Anmeldenummer: 97109565.8
(22) Anmeldetag: 12.06.1997
(51) Int. Cl.: D04H 1/00, A47L 13/16, A47K 7/02, C08L 1/12, D04H 1/42

(54) **Schwammtuch und Verfahren zu dessen Herstellung**
Sponge cloth and method of production
Tissu éponge et procédé de fabrication

(30) Priorität: 14.06.1996 DE 19623704
(43) Veröffentlichungstag der Anmeldung: 17.12.1997
(73) Patentinhaber: Firma Carl Freudenberg, 69469 Weinheim (DE)
(72) Erfinder: Link, Eberhard, Dr., 72175 Dornhan (DE); Hausdorf, Jörg, 64658 Fürth/Odenwald (DE); Hermanutz, Frank, Dr., 71229 Leonberg (DE)

(56) Entgegenhaltungen:
- EP-A- 0 705 868
- GB-A- 2 284 421
- US-A- 5 047 180
- DATABASE WPI Section Ch, Week 7848 Derwent Publications Ltd., London, GB; Class A11, AN 78-87085A XP002046827 & JP 53 123 459 A (NOGUCHI KENKYUSHO KK) , 27.Oktober 1978

## Beschreibung

Die Erfindung befaßt sich mit einem Schwammtuch aus Cellulose und einem Verfahren zu dessen Herstellung.

In der Druckschrift Ullmann's Encyklopädie der technischen Chemie, 3. Aufl. (1967), Bd. 18, S. 175-177, wird ein Herstellungsverfahren für schwammartige Cellulosegebilde beschrieben, bei welchem aus Holz gewonnene Zellstofflagen in einer 15 - 20%-igen NaOH-Lösung, welche im Überschuß vorliegt, gequollen werden. Dabei entsteht nach einiger Zeit Natroncellulose. Die Natronlauge wird danach abgepreßt; sie enthält in gelöster Form Hemicellulosen, welche die nachfolgenden Verfahrensschritte ansonsten störend beeinflussen würden. Der verbleibende Preßkuchen wird in zerkleinerter Form mit Schwefelkohlenstoff behandelt, wobei Cellulosexanthogenat entsteht. Dieses löst sich glatt in NaOH-Lösung, worin es sich nach einiger Zeit unter Senkung des Durchschnittspolymersisationsgrades (DP) abbaut. Je nach eingesetzter Zellstoffqualität und Lagerzeit erfolgt dabei eine Verringerung des DP von 800 bis 1200 auf 200 bis 600.

Der DP ist als die mittlere Anzahl an Cellulose-Einzelmolekülen definiert, aus denen eine Cellulosepolymerkette im Mittel aufgebaut ist.

Die alkalische Xanthogenatlösung wird anschließend mit porenbildendem Glaubersalz, Baumwollfasern und gegebenenfalls Farbpigment gemischt und die Mischung bis zur gleichmäßigen Verteilung aller Komponenten gerührt oder geknetet. Es folgt das Aufstreichen der Mischung auf ein Band mittels eines flachen oder walzenähnlichen Gerätes. Das Band kann zur Profilierung der Oberfläche des Produktes ein dreidimensionales Muster aufweisen.

Die auf dem Band befindliche Masse wird in einem alkalischen und mit Glaubersalz angereicherten Koagulationsbad von 100°C einige Minuten lang geführt. Dabei wird das Xanthogenat thermisch aufgespalten, das porenbildende Salz herausgelöst, und es entsteht auf dem Band ein schwammartiges Gebilde als Bahnenware. Diese wird in Wasser gewaschen und dabei mit einer geringen Menge 1 %-iger Schwefelsäurelösung in Verbindung gebracht, um den verbleibenden Restgehalt an organischen Schwefelkohlenstoff- und Schwefelwasserstoffverbindungen zu vermindern.

Die Erfindung hat zur Aufgabe, ein Schwammtuch und ein Verfahren zu dessen Herstellung anzugeben, wobei die zuletzt genannten Schwefelverbindungen, insbesondere Schwefelkohlenstoff und Schwefelwasserstoff, im Schwammtuch gänzlich fehlen. Eine weitere Aufgabe ist es, die Abnahme des Durchschnittspolymerisationsgrades DP der Cellulose während der Herstellung des Schwammtuches zu vermeiden, um höhere Festigkeitswerte zu erzielen und die Lagerfähigkeit der Celllosederivate zu steigern.

Die Anmelderin hat gefunden, daß die Aufgabe gelöst werden kann, wenn bei der Herstellung von dekristallisierter, niedersubstituierter (DS von 0,2 bis 1,5), acetylierter Cellulose ausgegangen wird, die in Lösungsmitteln oder Lösungsmittelsystemen auf Basis Dimethylsulfoxid oder Dimethylacetamid löslich ist. Aus letzterem Grund muß eine Derivatisierung mit Schwefelkohlenstoff zur Auflösung der Cellulose nicht mehr durchgeführt werden.

Die Erfindung ist im ersten Verfahrensanspruch aufgezeigt und wird im folgenden näher erläutert. Vorteilhafte Ausgestaltungen des Verfahrens werden in den Unteransprüchen offenbart. Das Schwammtuch selbst trägt die Kennzeichen des Produktanspruchs.

Meist aus Holz gewonnener Zellstoff, welcher als Schichtmaterial im Handel erhältlich ist, wird in einem Rührgefäß mit 15 bis 35 Vol.-%iger wäßriger Alkalilauge, vorzugsweise einer NaOH-Lösung, übergossen und etwa 1 Stunde ruhen gelassen. Die Alkalilauge wird zweckmäßig im mindestens vierfachen Überschuß, bezogen auf das Trockengewicht des eingesetzten Zellstoffs, angewendet.

Der Zeitwert 1 Stunde kann unterschritten werden, wenn durch vorherige Testversuche gewährleistet ist, daß das Quellen des Zellstoffs vollständig erfolgt.

Danach wird die Alkalilauge in einem solchen Umfang durch Abpressen entfernt, daß der verbleibende Preßkuchen das Dreifache des Trockengewichts des eingesetzten Zellstoffs aufweist. Dieser Preßkuchen wird mittels einer konvetionellen Schlag- oder Shreddermühle auf Partikelgrößen unter 3 mm Durchmesser zerkleinert und dabei aufgelockert.

Die Partikel werden anschließend in einen Rührbehälter gegeben und dort mit der fünffachen Menge eines flüssigen, auf Natroncellulose, also das Partikelmaterial, acetylierend wirkenden Agens übergossen und die Masse etwa 60 min lang gerührt.

Bespiele für verwendbare Agenzien sind Essigsäureanhydrid, Eisessig (wasserfreie Essigsäure) oder Acetylchlorid.

Dabei werden freie OH-Gruppen der Cellulose durch Acetylgruppen bis zu einem Durchschnitts-Substituierungsgrad (DS) von 0,2 bis 1,5 hinab verestert .

Der Durchschnitts-Substituierungsgrad DS gibt die Anzahl der OH-Gruppen an, welche im Mittel von den im Mittel 3 freie Hydroxylgruppen des Cellulose-Einzelmoleküls in dessen Polymerkette substituiert sind. Hieraus ergibt sich für den DS ein Maximalwert von 3 und ein Minimalwert von 0.

Danach wird das überschüssige Substituierungsmittel, also die flüssige Phase, aus der Feststoffmasse unter gleichzeitigem Absaugen ausgepreßt. Der Rückstand, die nun in substituierter Form vorliegende Cellulosederivat-Masse, wird mit Wasser mindestens dreimal gewaschen und anschließend bei einer Umgebungstemperatur von 100°C zu einem weißen Pulver getrocknet.

Das Cellulosederivat-Pulver wird dann bei 20°C bis 50°C zu einem Anteil von 4 bis 12 Gew.-% in einem auf Dimethylsulfoxid oder Dimethylacetamid basierenden Lösungsmittel oder Lösungsmittelsystem gelöst.

Als bevorzugte Lösungsmittel(-systeme) erwiesen sich Dimethylsulfoxid (DMSO), DMSO/Lithiumchlorid (Chloridgehalt 5 Gew.-%), DMSO/Magnesiumchlorid (Chloridgehalt 3 Gew.-%), DMSO/N-Methyl-morpholin-N-oxid oder Dimethylacetamid/Lithiumchlorid. Dabei dienen die anorganischen Chloride als Lösungsvermittler. Insbesondere die Dimethylsulfoxid-Systeme weisen eine gute Lösekraft auf, sind im Hinblick auf den Arbeitsschutz problemlos zu handhaben und lassen sich aus Laborabfällen leicht regenerieren.

Anschließend werden zu dieser Lösung, welche als 100 Gew.-% definiert wird, 100 bis 500 Gew.-% wasserfreies Salz zugegegeben, welches als Porenbildner dient. Solche Salze sind an sich bekannt; sie lösen sich in Wasser und schwachen Säuren und treten in keine chemische Wechselwirkung mit dem Cellulosederivat.

Weiterhin wird die Lösung versetzt mit 0,5 bis 4 Gew.-% im verwendeten Lösungsmittel unlöslichen Fasern natürlichen oder synthetischen Ursprungs und ggf. mit bis zu 5 Gew.-% üblicher Farbstoffe, zweckmäßig Pigmentfarbstoffe, und Schaumbildnern.

Die Bezeichnung "wasserfrei" für die Porenbildnersalze ist so zu verstehen, daß in ihnen bei Raumtemperatur kein oder lediglich gebundenes Kristallwasser enthalten ist. Als Beispiel sei das besonders preiswert erhältliche NaCl genannt.

Die entstandene Mischung wird bei Raumtemperatur gerührt oder geknetet, bis sich eine homogene Verteilung aller Komponenten zeigt, was dadurch zu beobachten ist, daß bei Zugabe von Farbstoff sich dieser gleichmäßig in der Mischung verteilt hat. Dieser Vorgang ist üblicherweise nach 10 bis 30 min abgeschlossen.

Es folgt das Gießen oder Aufstreichen der Mischung auf ein bewegliches Band, wobei die Auftragsdicke der gewünschten Dicke des herzustellenden Schwammtuchs gleicht. Soll dieses eine Oberflächenstruktur aufweisen, verwendet man ein Band, welches auf seiner der Mischung zugewandten Oberfläche die entsprechende dreidimensionale Struktur zeigt. Die Auftragsdicke beträgt zweckmäßig von wenigen Millimetern bis zu 3 Zentimeter.

Das beschichtete Band wird durch ein Bad mit kochendem Wasser geführt, wobei sich die Verweildauer darin nach der Zeit richtet, bis sich das Porenbildnersalz vollständig gelöst hat und sich ein schwammartiges, zusammenhängendes Flächengebilde auf dem Band befindet. Dieses läßt sich leicht als Roh-produkt abheben und wird mit Wasser gewaschen, bis keine Rückstände des Lösungsmittelsystems und freier Farbstoffe mehr nachweisbar sind. Es folgt das Trocknen bei 100°C zum fertigen Schwammtuch in einer konventionellen, beweglichen oder stationären Trockenvorrichtung.

Eine Verfahrensvariante besteht darin, das schwammartige Flächengebilde nach der Behandlung mit kochendem Wasser auf dem beweglichen Band, während der oder anschließend an die folgende Wäsche, in einem offenen Gefäß unter Rühren in 0,1 bis 2 normaler, wäßriger Natronlauge bei 50°C 1 Stunde lang zu behandeln. Hierdurch werden die im Schwammtuchmaterial vorhandenen Acetylgruppen durch Rückspaltung einer Esterverseifung unterworfen. Der Vorgang kann auch bei Raumtemperatur erfolgen, jedoch wird die Reaktion bei 50°C wesentlich beschleunigt und dadurch ökonomischer. Die Reaktion kann in einer offenen Vorrichtung durchgeführt werden. Die Porenstruktur des Tuches wird dabei nicht verändert, jedoch erhält es durch diese Maßnahme die wertvolle Eigenschaft, daß sich das Tuch äußerst spontan mit Wasser benetzt.

Um ein besonders voluminöses, weiches Tuch zu erhalten, kann man als Schaumbildner vor dem Behandeln in kochendem Wasser der auf das Band aufgebrachten Masse ein anorganisches Carbonat oder Hydrogencarbonat in einer Menge von 0,1 bis 3 Gew.-% zusetzen. Parallel hierzu enthält das kochende Wasser geringe Mengen einer organischen oder anorganischen Säure, welche jedoch ausreichen, um aus dem Carbonat bzw. Hydrogencarbonat vollständig Kohlendioxid zu bilden. Dabei haben sich pH-Werte von 6 oder wenig darunter als ausreichend erwiesen.

Als Säuren können neben der preiswerten Schwefelsäure auch Säuren geringerer Gefahrstoffklassen verwendet werden, wie z.B. Zitronensäure.

Als besonders geeignetes Acetylierungsmittel hat sich wegen seiner preiswerten Verfügbarkeit Essigsäureanhydrid erwiesen.

Das erfindungsgemäße Schwammtuch enthält keinerlei organische oder anorganische Schwefelverbindungen, da Schwefelatome nur gegebenenfalls im verwendeten Lösungsmittel vorhanden sind und dort chemisch wirkungslos bleiben.

Da bei der Herstellung keine Verringerung des Durchschnittspolymersisationsgrades (DP) am eingesetzten Zellstoff stattfindet, können Rohstoffe mit hohen DP-Werten von bis zu 1200 eingesetzt werden, wodurch Schwammtücher herstellbar sind, welche den bei der Verarbeitung auftretenden mechanischen Kräften ohne Festigkeitsverluste widerstehen.

Bereits durch die Auswahl der Rohstoffe mit ihren DP-Werten können die diesen entsprechenden Eigenschaften der Endprodukte vorausbestimmt werden, ohne den schwer kontrollierbaren Schritt des DP-Abbaus berücksichtigen zu müssen.

Außer dem Auskochen mit Wasser am Ende des erfindungsgemäßen Verfahrens können alle Behandlungsschritte bei Raumtemperatur durchgeführt werden.

Bei der Herstellung selbst entstehen keine giftigen Dämpfe oder Abwässer.

Die Cellulosederivate sind in den genannten organischen Lösungsmitteln ohne Veränderung ihres DP-Wertes auch mehrere Monate lang lagerfähig.

Die Erfindung wird anhand der nachfolgenden Beispiele näher erläutert:

Im Handel erhältliche Zellstoffplatten mit einem DP von 1000 werden zu kleinen Stücken geshreddert. Hiervon werden 500 g in ein 5l-Becherglas gegeben und mit 22%-iger NaOH-Lösung im Überschuß übergossen. Nach 30 min wird die Natronlauge über eine Glasfritte abgesaugt und der verbleibende Zellstoff mit einer Presse bei 50 bar abgepreßt.

Der abgepreßte Zellstoff wird zerkleinert, in einer Apparatur mit Rührer und Kühlmöglichkeit mit Essigsäureanhydrid im Überschuß übergossen und eine halbe Stunde gerührt. Die feste Masse wird abfiltriert und mit Wasser so lange nachgewaschen, bis der pH-Wert des Waschwassers neutral ist. Danach wird der Preßkuchen gelockert, auf eine Schale gelegt und bis zur Gewichtskonstanz bei 100°C getrocknet.

Hiervon wird der DS bestimmt, indem das Cell-acetat mit NaOH verseift, der Überschuß an NaOH mit HCL zurücktitriert und aus dem Verbrauch an NaOH der DS errechnet wird. Es ergibt sich ein DS von 0,75.

62,5 g des getrockneten Cell-acetats wird vorgelegt und mit 1250 g DMSO überschüttet, gerührt und dabei gelöst. Nach 30 min werden noch 10 g MgCl₂ zugegeben, die sich ebenfalls lösen und der Lösung eine klarere Farbe geben.

Diese Lösung wird in einen Kneter überführt. Dann werden ihr 16,7 g Baumwoll-Fasern, 2 kg Kochsalz und 2 g Natriumhydrogencarbonat zugegeben. Danach wird 30 min geknetet. Die homogene Masse wird auf ein profiliertes Band gestrichen, vergleichmäßigt und ein profiliertes Gegenband dagegengepreßt, um dem Teig beidseitig eine Struktur zu geben. Das Band wird in einem Wasserbad, welches mit Citronensäure auf pH 5 gestellt ist, für 10 min gekocht. Das fertige Schwammtuch kann vom Band genommen werden; es löst sich bereits während des Kochvorganges vom Band leicht ab.

Mit Wasser wird nachgewaschen. Danach wird das Tuch in eine 1-normale NaOH-Lösung gelegt und bei 50°C für eine Stunde gerührt, um die Acetatgruppen wieder zu verseifen. Man erhält ein 7 mm dickes, volumiges und weiches Tuch mit einem Raumgewicht von 42 kg/m³.

Der abermals bestimmte DP ergibt nach DIN 54 270 (Lösen der Cellulose in Eisen-Weinsäurelösung und Bestimmung der spezifischen Viskosität mit und ohne Cellulose) keine über der Toleranz des Meßverfahrens liegende Abnahme des DP gegenüber dem Anfangszustand.

Zur Prüfung auf die sonst üblichen Begleitstoffe Schwefelkohlenstoff und Schwefelwasserstoff wurden 5 g Tuch mit 200 ml Wasser und 10 ml konzentrierter Phosphorsäure übergossen, 3 h gekocht und mit Schutzgas gasförmige Substanzen ausgetrieben. Schwefelwasserstoff wird mit Zinksulfat gefällt, Schwefelkohlenstoff an Aktivkohle adsorbiert. Die Auswertung ergab keine Werte, weder für CS₂ noch für H₂S.

## Patentansprüche

1. Verfahren zur Herstellung eines Cellulose-Schwammtuchs mit den Schritten:
- Quellen von Zellstoff in einem Rührgefäß durch Übergießen mit 15 bis 35%-iger Alkalilauge im mindestens vierfachen Überschuß, bezogen auf das Trockengewicht des eingesetzten Zellstoffs;
- Stehenlassen des übergossenen Zellstoffs für 1 Stunde;
- Abpressen der Alkalilauge, bis der Preßkuchen das Dreifache des Trockengewichtes des eingesetzten Zellstoffs aufweist;
- Zerkleinern des Preßkuchens durch Mahlen auf Partikelgrößen kleiner als 3 mm Durchmesser;
- Übergießen des zerkleinerten Preßkuchens in einem Rührbehälter mit der fünffachen Menge eines flüssigen, auf Natroncellulose acetylierend wirkenden Agens;
- Rühren des Reaktionsgemisches für 60 min;
- Auspressen der flüssigen Phase aus der Feststoffmasse unter gleichzeitigem Absaugen;
- Waschen der entstandenen Cellulosederivatmasse mit Wasser
- Trocknen der Cellulosederivatmasse bei 100°C zu einem Pulver;
- Lösen des Cellulosederivatpulvers bei 20°C bis 50°C zu 4 bis 12 Gew.-% in einem auf Dimethylsulfoxid oder Dimethylacetamid basierenden Lösungsmittelsystem;
- Zugeben zur Lösung, welche als 100 Gew.-% definiert wird, von
a) 100 bis 500 Gew.-% eines bei Raumtemperatur wasserfreien Salzes, welches in Wasser löslich und bezüglich des Cellulosederivats inert ist, als Porenbildner,
b) 0,5 bis 4 Gew.-% im Lösungsmittel unlöslicher Fasern und
c) bis zu 5 Gew.-% Farbstoffe und Schaumbildner;
- Rühren oder Kneten der Mischung bei Raumtemperatur für 10 bis 30 min bis zur homogenen Verteilung aller Komponenten;
- Gießen oder Aufstreichen der Mischung in einer dem herzustellenden Schwammtuch gleichenden Dicke auf ein gewünschtenfalls eine dreidimensionale Oberflächenstruktur aufweisendes, bewegliches Band und Führen des Bandes durch ein Bad mit kochendem Wasser, bis sich ein zusammenhängendes, schwammartiges Flächengebilde abgeschieden hat;
- Abtrennen des Flächengebildes von dem Band als Roh-Produkt;
- Waschen des Produktes mit Wasser;
- Trocknen des entstandenen Schwammtuchs bei 100°C.

2. Verfahren nach Anspruch 1, dadurch gekennzeichnet, daß man das schwammartige Flächengebilde nach der Behandlung mit kochendem Wasser auf dem beweglichen Band, während der oder anschließend an die folgende Wäsche, in einem offenen Gefäß unter Rühren in 0,1 bis 2n wäßriger Natronlauge bei 50°C 1 Stunde lang behandelt.

3. Verfahren nach Anspruch 1 oder 2, gekennzeichnet durch den Zusatz eines anorganischen Carbonates oder Hydrogencarbonates in einer Menge von 0,1 bis 3 Gew.-% zu der Mischung vor dem Kochen auf dem beweglichen Band und von einer organischen oder anorganischen Säure zu dem kochenden Wasser bis zum Erreichen eines pH-Wertes von höchstens 6.

4. Verfahren nach Anspruch 1 bis 3, gekennzeichnet durch die Verwendung von Essigsäureanhydrid als Acetylierungsmittel.

5. Verfahren nach einem der Ansprüche 1 bis 4, gekennzeichnet durch die Verwendung eines der Lösungsmittelsysteme Dimethylsulfoxid, Dimethylsulfoxid/Lithiumchlorid, Dimethylsulfoxid/N-Methyl-morpholin-N-oxid oder Dimethylacetamid/Lithiumchlorid.

6. Schwammtuch, hergestellt nach dem Verfahren der Ansprüche 1 bis 5, zumindest bestehend aus modifizierter Cellulose und natürlichen und/oder synthetischen Fasern, wobei die Cellulose in dekristallisierter Form vorliegt, wobei die Hydroxyl-Gruppen der Cellulose mit Acetylgruppen substituiert sind, wobei der Durchschnitts-Substituierungsgrad (DS) 0,2 bis 1,5 beträgt und wobei keinerlei organischen oder anorganischen Schwefelverbindungen im Schwammtuch vorhanden sind.

## Claims

1. A process for producing a cellulose sponge cloth comprising the steps of:
- swelling pulp material in a stirred vessel by overpouring with from 15 to 35% strength alkali metal lye in an at least fourfold excess, based on the dry weight of the pulp material used;
- leaving the overpoured pulp material to stand for 1 hour;
- pressing off the alkali metal lye until the press cake has three times the dry weight of the pulp material used;
- comminuting the press cake by grinding to particle sizes less than 3 mm in diameter;
- overpouring the comminuted press cake in a stirred vessel with five times the amount of a liquid acetylating agent for sodium cellulose;
- stirring the reaction mixture for 60 min;
- pressing the liquid phase out of the solid material while aspirating at the same time;
- washing the resulting cellulose derivative material with water
- drying the cellulose derivative material at 100°C to form a powder;
- dissolving the cellulose derivative powder at from 20°C to 50°C in a solvent system based on dimethyl sulphoxide or dimethylacetamide to form a solution from 4 to 12% by weight in strength;
- adding to the solution, which is defined as 100% by weight,
a) from 100 to 500% by weight of a water-soluble salt which is anhydrous at room temperature and is inert with regard to the cellulose derivative, as pore-former,
b) from 0.5 to 4% by weight of fibres which are insoluble in the solvent and
c) up to 5% by weight of dyes and foam formers;
- stirring or kneading the mixture at room temperature for from 10 to 30 min until all components are homogeneously dispersed;
- pouring or spreading the mixture in a thickness equal to the thickness of the sponge cloth to be produced on a movable belt which, if desired, has a three-dimensional surface structure and guiding the belt through a bath of boiling water until a coherent spongelike sheet material has separated;
- removing the sheet material from the belt as crude product;
- washing the product with water;
- drying the resulting sponge cloth at 100°C.

2. A process according to claim 1, characterized in that the spongelike sheet material is treated in an open vessel in from 0.1 to 2 N aqueous sodium hydroxide solution at 50°C for 1 hour with stirring following the treatment with boiling water and during or after the subsequent washes.

3. A process according to claim 1 or 2, characterized by the addition of an inorganic carbonate or bicarbonate in an amount of from 0.1 to 3% by weight to the mixture prior to the boiling on the movable belt and of an organic or inorganic acid to the boiling water until a pH of not more than 6 is obtained.

4. A process according to claim 1 to 3, characterized by the use of acetic anhydride as acetylating agent.

5. A process according to any one of claims 1 to 4, characterized by the use of one of the solvent systems dimethyl sulphoxide, dimethyl sulphoxide/-lithium chloride, dimethyl sulphoxide/N-methylmorpholine N-oxide or dimethylacetamide/lithium chloride.

6. A sponge cloth produced according to the process of claims 1 to 5, consisting at least of modified cellulose and natural and/or synthetic fibres, the cellulose being present in decrystallized form, the hydroxyl groups of the cellulose being substituted by acetyl groups, the average degree of substitution (DS) being from 0.2 to 1.5 and no organic or inorganic sulphur compounds whatsoever being present in the sponge cloth.

## Revendications

1. Procédé pour la fabrication d'un tissu éponge en cellulose, comprenant les étapes consistant à:
- gonfler de la pâte de cellulose dans un récipient d'agitation en arrosant avec de la lessive alcaline possédant une concentration de 15 à 35%, en un excès au moins multiplié par quatre, rapporté au poids à l'état sec de la pâte de cellulose mise en oeuvre;
- laisser reposer la pâte de cellulose après l'arrosage pendant 1 heure;
- extraire par pression la lessive alcaline jusqu'à ce que le gâteau obtenu par compression présente le triple du poids à sec de la pâte de cellulose mise en oeuvre;
- désintégrer le gâteau obtenu par compression par broyage pour obtenir des granulométries inférieures à un diamètre de 3 mm;
- arroser le gâteau désintégré obtenu par compression dans un récipient d'agitation avec une quantité multipliée par cinq d'un agent liquide ayant un effet d'acétylation sur la cellulose sodique;
- agiter le mélange réactionnel pendant 60 minutes;
- évacuer par pression la phase liquide de la matière solide tout en filtrant simultanément sous aspiration;
- laver avec de l'eau la matière de dérivé de cellulose obtenue;
- sécher la matière de dérivé de cellulose à une température de 100°C pour obtenir une poudre;
- dissoudre la poudre de dérivé de cellulose à une température de 20°C à 50°C jusqu'à concurrence de 4 à 12% en poids dans un système de solvant à base de diméthylsulfoxyde ou de diméthylacétamide;
- ajouter à la solution qui est définie comme représentant 100% en poids,
a) à concurrence de 100 à 500% en poids, un sel anhydre à la température ambiante qui est soluble dans l'eau et inerte vis-à-vis du dérivé de cellulose, à titre d'agent porogène,
b) à concurrence de 0,5 à 4% en poids, des fibres insolubles dans le solvant, et
c) jusqu'à concurrence de 5% en poids, des colorants et des agents moussants;
- agiter ou malaxer le mélange à la température ambiante pendant un laps de temps de 10 à 30 minutes jusqu'à ce que l'on obtienne une distribution homogène de tous les composants;
- verser ou enduire le mélange en une épaisseur analogue à celle du tissu éponge à fabriquer, sur une bande mobile présentant le cas échéant une structure superficielle en trois dimensions et guider la bande à travers un bain d'eau en ébullition jusqu'à ce que l'on obtienne, par précipitation, un produit plat cohérent spongieux;
- séparer le produit plat de la bande sous forme de produit brut;
- laver le produit avec de l'eau;
- sécher le tissu éponge obtenu à une température de 100°C.

2. Procédé selon la revendication 1, caractérisé en ce qu'on traite le produit plat spongieux, après le traitement avec de l'eau en ébullition sur la bande mobile, pendant le lavage ultérieur ou directement après ce dernier, dans un récipient ouvert, sous agitation, dans de la lessive de soude aqueuse de 0,1 à 2n, à une température de 50°C pendant 1 heure.

3. Procédé selon la revendication 1 ou 2, caractérisé par l'addition d'un carbonate ou d'un hydrogénocarbonate inorganique au mélange en une quantité de 0,1 à 3% en poids avant la mise en ébullition sur la bande mobile et d'un acide organique ou inorganique à l'eau en ébullition jusqu'à ce que l'on atteigne une valeur de pH maximale de 6.

4. Procédé selon les revendications 1 à 3, caractérisé par l'utilisation d'anhydride acétique à titre d'agent d'acétylation.

5. Procédé selon l'une quelconque des revendications 1 à 4, caractérisé par l'utilisation d'un des systèmes de solvants choisis parmi le groupe comprenant le diméthylsulfoxyde, le diméthylsulfoxyde/chlorure de lithium, le diméthylsulfoxyde/N-oxyde de N-méthylmorpholine ou le diméthylacétamide/chlorure de lithium.

6. Tissu éponge fabriqué conformément au procédé selon les revendications 1 à 5, constitué au moins par de la cellulose modifiée et par des fibres naturelles et/ou synthétiques, dans lequel la cellulose est présente sous forme décristallisée, les groupes hydroxyle de la cellulose sont substitués avec des groupes acétyle, le degré de substitution moyen (DS) s'élève de 0,2 à 1,5 et aucun composé de soufre organique ou inorganique quel qu'il soit n'est présent dans le tissu éponge.
